Europäisches Patentamt

European Patent Office

Office européen des brevets

(19)

(11) Veröffentlichungsnummer: **0 103 872**
**A2**

(12) **EUROPÄISCHE PATENTANMELDUNG**

(21) Anmeldenummer: **83109206.9**

(22) Anmeldetag: **16.09.83**

(51) Int. Cl.³: **H 04 L 25/30**

(30) Priorität: **20.09.82 DE 3234740**

(43) Veröffentlichungstag der Anmeldung:
**28.03.84 Patentblatt 84/13**

(84) Benannte Vertragsstaaten:
**AT CH DE FR GB IT LI**

(71) Anmelder: **SIEMENS AKTIENGESELLSCHAFT**
**Berlin und München Wittelsbacherplatz 2**
**D-8000 München 2(DE)**

(72) Erfinder: **Thinschmidt, Hans**
**Kreuzlingerstrasse 52c**
**D-8034 Germering(DE)**

(54) **Schaltungsanordnung zum Abtasten von Nutzsignalen.**

(57) In einer Abtaststufe (A) sind zwei Gleichrichteranordnungen vorgesehen, wobei eine dieser Gleichrichteranordnungen positive und die andere dieser Gleichrichteranordnungen negative Pegel eines Eingangssignals (e) gleichrichtet und wobei die betreffenden Ausgangssignale dieser Gleichrichteranordnungen einem gemeinsamen Spannungsteiler (R1/R2) zugeführt werden, der aus einem Abgriff ein mit den Eingangssignalen gemeinsam "schwebendes" Bezugspotential an einen ersten Eingang einer Komparatorstufe (K) abgibt, welcher Komparatorstufe (K) über einen zweiten Eingang auch das Eingangssignal der Abtaststufe (A) zugeführt wird. Die Abtaststufe (A) kann Eingangssignale (e) abtasten, deren Amplituden und Potentiallagen innerhalb eines vorbestimmten Eingangssignalspannungsbereiches beliebig variiert werden können.

**FIG 1**

E    A    K

EP 0 103 872 A2

## Schaltungsanordnung zum Abtasten von Nutzsignalen

Die vorliegende Erfindung betrifft eine Schaltungsanordnung zum Abtasten von Nutzsignalen, die in einem vorbestimmten Eingangssignalspannungsbereich in Amplitude und Potentiallage beliebig variiert sein können.

In bestimmten Signalübertragungssystemen, z. B. in Busleitungssystemen mit Lichtwellenleitern, besteht das Problem, daß aufgrund der unterschiedlichen Übertragungseigenschaften unterschiedlich langer Übertragungsstrecken oder dergl. die einem Signalempfänger zuzuführenden Nutzsignale innerhalb eines vorgegebenen Eingangssignalspannungsbereiches in Amplitude und/oder Potentiallage stark variiert sein können. Schwankungen in Amplituden und/oder Potentiallage können auch durch die Eingangsstufe des betreffenden Signalempfängers verursacht werden, beispielsweise durch Temperaturdrift oder dergl.. Unter anderem ergibt sich bei Übertragungssystemen, beispielsweise optischen Übertragungssystemen, die es aus physikalischen bzw. technischen Gründen nicht gestatten, die zu übertragenden Signale auf ein für die Sendeseite und die Empfangsseite gemeinsames Bezugspotential zu legen, das Problem, daß die Schaltpunkte der zu bewertenden Eingangssignale nicht unmittelbar bestimmbar sind. Es ergibt sich u. a. ein weiteres Problem dahingehend, daß Signalimpulsen, denen an sich eine positive Potentiallage oder anderen Signalimpulsen, denen an sich eine negative Potentiallage auf der betreffenden Senderseite zuordenbar ist, auf der Empfängerseite durch Einstreuung eines Störsignals nicht unmittelbar erkannt werden können.

Pap 1 Wi - 06.08.1982 Der vorliegenden Erfindung liegt die Aufgabe zugrunde, eine Schaltungsanordnung zum Abtasten von Nutzsignalen, die in einem vorbestimmten Eingangssignalspannungsbereich in Amplitude und Potentiallage beliebig variiert sein können, zu schaffen, die in der Lage ist, die Nutzsignalimpulse eindeutig einer positiven oder negativen Potentiallage zuzuordnen, um so den Informationsinhalt des Signals darstellen zu können. Aufgabengemäß soll die erfindungsgemäße Schaltungsanordnung darüberhinaus einen einfachen, wenige Bauteile umfassenden und daher zuverlässig arbeitenden Aufbau aufweisen.

Die der Erfindung zugrundeliegende Aufgabe wird durch eine Schaltungsanordnung zum Abtasten von Nutzsignalen, die in einem vorbestimmten Eingangssignalspannungsbereich in Amplitude und Potentiallage beliebig variiert sein können gelöst, die dadurch gekennzeichnet ist, daß in einer Abtaststufe zwei Gleichrichteranordnungen vorgesehen sind, wobei eine dieser Gleichrichteranordnungen positive und die andere dieser Gleichrichteranordnungen negative Pegel eines Eingangssignals gleichrichtet, daß jede dieser Gleichrichteranordnungen jeweils mit einem ihr zugeordneten Ladekondensator verbunden ist, daß jeweils einer der Beläge der Ladekondensatoren fest auf ein Bezugspotential, vorzugsweise Erde, des Eingangssignals gelegt ist, daß die jeweils anderen Beläge über eine Impedanz miteinander verbunden sind und daß an die Impedanz einerseits und einen Signaleingang der Abtaststufe andererseits einer Komparatoranordnung angeschlossen ist, so daß die Komparatoranordnung das Eingangssignal mit einem von der Impedanz abgeleiteten Bezugspotential vergleichen kann.

Die erfindungsgemäße Schaltungsanordnung bietet den Vorteil, daß Eingangssignalimpulse von in einem vorbestimmten Eingangssignalspannungsbereich beliebig variierten Amplituden und Potentiallagen eindeutig auswertbar wer-

. 0103872
VPA 82 P 1794 E

den und daß die Schaltungsanordnung nur wenige Bauteile umfaßt, wodurch sie kostengünstig herzustellen ist und eine zuverlässige Arbeitsweise sicherstellt.

Vorteilhafte Weiterbildungen der erfindungsgemäßen Schaltungsanordnung sind durch die in den Unteransprüchen angegebenen Merkmale gekennzeichnet.

Im folgenden wird die Erfindung anhand von mehreren, bevorzugte Ausführungsbeispiele für die vorliegende Erfindung betreffender Figuren im einzelnen erläutert.

Fig. 1 zeigt das Prinzipschaltbild einer Schaltungsanordnung gemäß der vorliegenden Erfindung mit einer Eingangsstufe $\underline{E}$, einer Abtaststufe $\underline{A}$ und einer Komparatorstufe $\underline{K}$.

Fig. 2 zeigt eine weitere Ausführungsform einer Schaltungsanordnung gemäß der vorliegenden Erfindung mit einer Eingangsstufe $\underline{E}$, einer Abtaststufe $\underline{A}$ und einer Komparatorstufe $\underline{K}$.

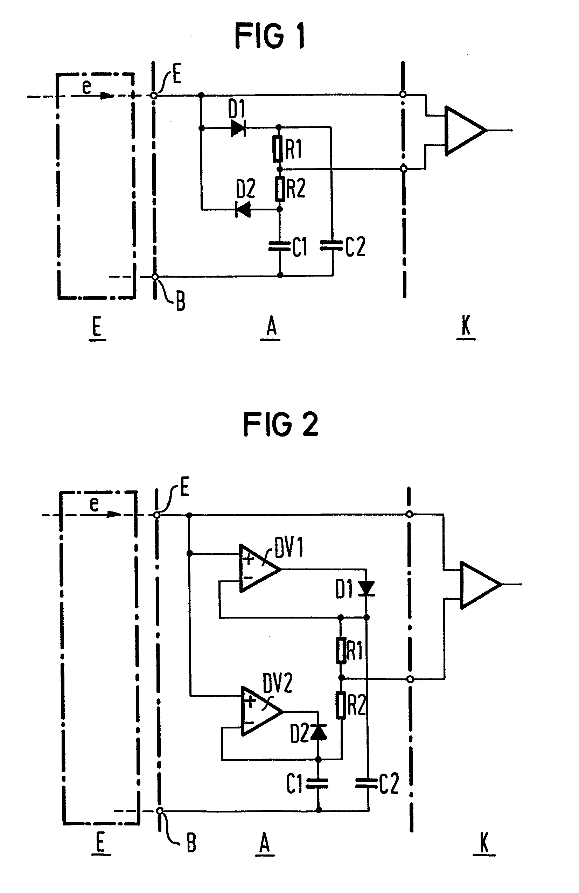

Fig. 1 zeigt, wie bereits erläutert, ein erstes Ausführungsbeispiel für die vorliegende Erfindung. An eine Eingangsstufe $\underline{E}$ (nur angedeutet) ist eine Abtaststufe A über eine Eingangsklemme E, der ein Eingangssignal e zugeführt wird, und eine Klemme, die auf einem Bezugspotential, vorzugsweise Erde, B liegt, angeschlossen. Die Eingangsklemme E ist innerhalb der Abtaststufe $\underline{A}$ an zwei Dioden D1 u. D2 geführt, und zwar an die Anode der ersteren Diode und an die Kathode der zweiten Diode. Die Kathode der ersten Diode D1 ist mit einem ersten Widerstand R1 verbunden, und die Anode der zweiten Diode D2 ist mit einem zweiten Widerstand R2 verbunden. Die beiden Widerstände R1, R2 sind in einer Reihenschaltung zu einem Spannungsteiler zusammengeschaltet. An den Verbindungspunkt zwischen der Kathode der ersten Diode D1 und dem ersten Widerstand R1 ist ein Ladekondensator C2 angeschlossen. An den Verbindungspunkt zwischen der zweiten Diode D2 und dem zweiten Widerstand R2 ist ein weiterer Ladekondensator C1 angeschlossen. Diese beiden Ladekondensatoren C1, C2 liegen mit ihren anderen Belägen auf dem Bezugspotential B. Ein Abgriff zwischen den beiden Widerständen R1, R2 des mit diesen gebildeten Spannungsteilers ist an einen ersten Signaleingang einer Komparatorstufe K geführt, deren zweiter Signaleingang, wie bereits erläutert, mit der Eingangsklemme E der Abtaststufe A verbunden ist. Die erläuterte Schaltungsanordnung in Fig. 1 arbeitet derart, daß in der Abtaststufe A, die zwei Gleichrichteranordnungen enthält, die eine dieser Gleichrichteranordnungen positive und die andere dieser Gleichrichteranordnungen negative Pegel des Eingangssignals e gleichrichtet. Die Eingangssignalimpulse dieser unterschiedlichen Polaritäten werden mit den beiden Ladekondensatoren integriert, und das Signal, welches an den Abgriff des durch die beiden Widerstände R1 und R2 gebildeten Spannungsteilers abgegeben wird, stellt ein "schwebendes" Bezugspotential für die unterschiedlich gepolten Eingangssignalimpulse dar.

Fig. 2 zeigt eine abgewandelte Ausführungsform der Schaltungsanordnung gemäß Fig. 1. In dieser Schaltungsanordnung sind die Gleichrichteranordnungen aus Differentialverstärkern DV1, DV2 gebildet, denen die Dioden D1, D2 nachgeordnet sind. Vorzugsweise können diese Differentialverstärker DV1, DV2, jeweils als Operationsverstärker realisiert sein. Die beiden eine Impedanz R1/2 bildenden Widerstände bilden vorzugsweise einen Spannungsteiler aus ohmschen Widerständen.

Eine vorteilhafte Weiterbildung der Erfindung (nicht gezeigt) sieht vor, daß der Spannungsteiler n Abgriffe hat, wobei jeder dieser n Abgriffe jeweils mit einem individuellen Signaleingang der Komparatoranordnung K verbunden ist.

Vorteilhafterweise ist vorgesehen, daß der Spannungsteiler ein Teilungsverhältnis 1:1 hat. Überdies ist das Verhältnis zwischen dem Summenwert des Spannungsteilers und
dem Reihenschaltungswert der Kondensatoren C1, C2 vorteilhafterweise derart ausgewählt, daß sich eine ideale Nachführ-Zeitkonstante ergibt.

Vorteilhafterweise kann auch vorgesehen sein, daß die
Nachführ-Zeitkonstante nach Bedarf eingestellt (angepaßt)
werden kann, beispielsweise entsprechend dem jeweiligen
Übertragungs- und/oder Codierungsverfahren. Diese Einstellung kann zweckmäßig auf ähnliche Weise wie bei der
Weitverkehrstechnik (Dämpfungsausgleich) ferngesteuert
über die Signal-Übertragungsstrecke erfolgen. Die Einstellung kann jedoch alternativ dazu durch lokale, vorzugsweise rechnergesteuerte Schaltmittel durchgeführt
werden.

9 Patentansprüche
2 Figuren

0103872

VPA 82 P 1794 E

Patentansprüche:

1. Schaltungsanordnung zum Abtasten von Nutzsignalen, die in einem vorbestimmten Eingangssignalspannungsbereich in Amplitude und Potentiallage beliebig variiert sein können, dadurch gekennzeichnet, daß in einer Abtaststufe (A) zwei Gleichrichteranordnungen vorgesehen sind, wobei eine dieser Gleichrichteranordnungen positive und die andere dieser Gleichrichteranordnung negative Pegel eines Eingangssignals (e) gleichrichtet, daß jede dieser Gleichrichteranordnungen jeweils mit einem ihr zugeordneten Ladekondensator (C1 bzw. C2) verbunden ist, daß jeweils einer der Beläge der Ladekondensatoren (C1, C2) fest auf ein Bezugspotential (B), vorzugsweise Erde, des Eingangssignals (e) gelegt ist, daß die jeweils anderen Beläge über eine Impedanz (R1/R2) miteinander verbunden sind und daß an die Impedanz (R1/R2) einerseits und einen Signaleingang (E) der Abtaststufe (A) andererseits eine Komparatoranordnung (K) angeschlossen ist, so daß die Komparatoranordnung (K) das Eingangssignal mit einem von der Impedanz (R1/R2) abgeleiteten Bezugspotential vergleichen kann.

2. Schaltungsanordnung nach Anspruch 1, dadurch gekennzeichnet, daß die Gleichrichteranordnungen mittels Dioden (D1, D2) realisiert sind.

3. Schaltungsanordnung nach Anspruch 1, dadurch gekennzeichnet, daß die Gleichrichteranordnungen aus Differentialverstärkern (DV1, DV2) mit nachgeordneten Dioden (D1, D2) bestehen.

4. Schaltungsanordnung nach Anspruch 3, dadurch gekennzeichnet, daß die Differentialverstärker (DV1, DV2) jeweils als Operationsverstärker realisiert sind.

Pap 1 Wi - 06.08.1982

5. Schaltungsanordnung nach Anspruch 1, d a d u r c h
g e k e n n z e i c h n e t , daß die Impedanz (R1/R2)
ein Spannungsteiler ist.

6. Schaltungsanordnung nach Anspruch 5, d a d u r c h
g e k e n n z e i c h n e t , daß der Spannungsteiler
aus ohm'schen Widerständen (R1, R2) besteht.

7. Schaltungsanordnung nach Anspruch 6, d a d u r c h
g e k e n n z e i c h n e t , daß der Spannungsteiler
n Abgriffe hat, wobei jeder dieser n Abgriffe jeweils
mit einem individuellen Signaleingang der Komparatoranordnung (K) verbunden ist.

8. Schaltungsanordnung nach Anspruch 6, d a d u r c h
g e k e n n z e i c h n e t , daß der Spannungsteiler
ein Teilungsverhältnis 1:1 hat.

9. Schaltungsanordnung nach Anspruch 6, d a d u r c h
g e k e n n z e i c h n e t , daß das Verhältnis zwischen dem Summenwert des Spannungsteilers und dem Reihenschaltungswert der Kondensatoren (C1, C2) derart ausgewählt ist, daß sich eine ideale Nachführ-Zeitkonstante
ergibt.

0103872

-1/-1

# FIG 1

E          A          K

# FIG 2

E          B          A          K